# EUROPEAN PATENT APPLICATION

(11) **EP 1 528 633 A2**
(43) Date of publication of application: **04.05.2005**
(21) Application number: 04021956.0
(22) Date of filing: 15.09.2004
(51) Int. Cl.: H01R 13/504, H01R 9/16

(54) **Resin housing structure of electrical circuit device**

(30) Priority: 31.10.2003 JP 2003372946
(71) Applicant: DENSO CORPORATION, Kariya-city, Aichi-pref. 448-8661 (JP)
(72) Inventor: Oonishi, Jun, Kariya-shi, Aichi 448-8661 (JP)
(74) Representative: KUHNEN & WACKER

(57) **Abstract**

A resin housing structure for an electrical circuit device (1) to be mounted in a vehicle includes a resin connector (10) equipped with an electrical circuit (12) having a sensor mounted thereon and a connector terminal (13) for externally electrically connecting the electrical circuit (12) and a resin case (20) equipped with a fixing portion (22) to be fixed to the vehicle. The resin connector (10) and the resin case (20) are separately formed and joined to each other and unified into one body.

## Description

### FIELD OF THE INVENTION

The present invention relates to a resin housing structure of electrical circuit device mounted in a vehicle.

### BACKGROUND OF THE INVENTION

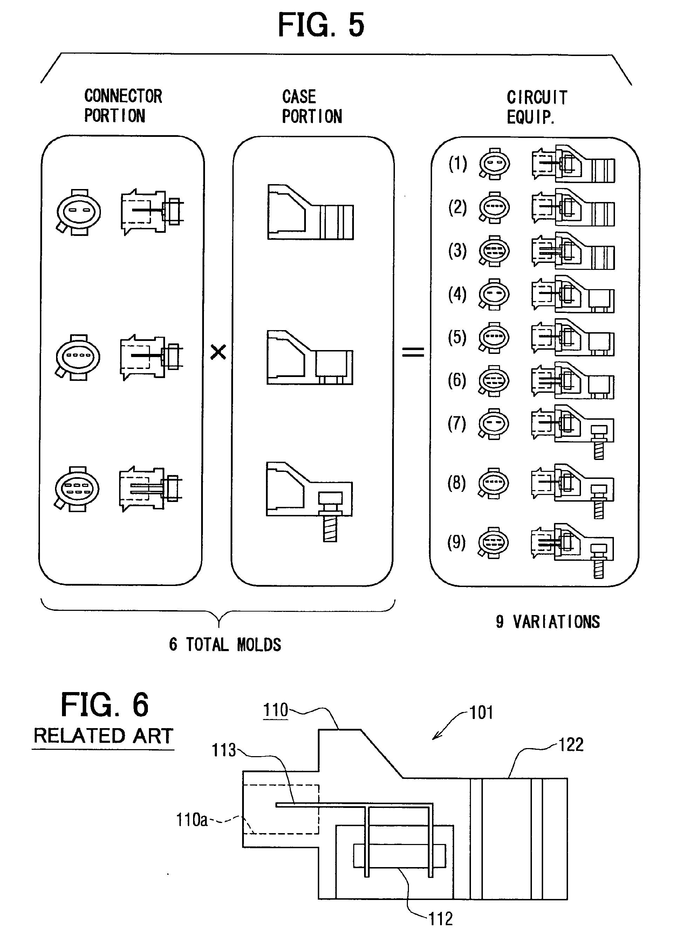

Various electrical circuit devices having sensors mounted thereon are mounted in vehicles. One of such electrical circuit devices is an electrical circuit device mounted in the front portion of a vehicle for collision detection. This device has a G sensor for detecting collision or vibration to inflate an air bag at vehicle crash time. A related art implementation of this electrical circuit device is shown in Fig. 6. The electrical circuit device 101 for detecting collision includes a circuit portion 112 having a G sensor mounted thereon, a connector terminal 113 for electrically connecting the circuit portion 112 to an external device (referred to generally as an "external connection"), and a resin case 110 which is molded integrally with these elements. A recess portion 110a is formed at one end side of the resin case 110 so that a portion of the connector terminal 113 is exposed to project into the recess portion 110a. A vehicle fixing portion 122 having a thick metal bush embedded therein for fixing to the vehicle is equipped at the other end side. The electrical circuit device 101 is fixed to the front portion of the vehicle through the vehicle fixing portion 122. A plug at an air bag control device side is engagingly inserted in the recess portion 110a so that the air bag control device and the circuit portion 112 are electrically connected to each other through the connector terminal 113, and a G detection signal detected by the G sensor may be transmitted to the air bag control device.

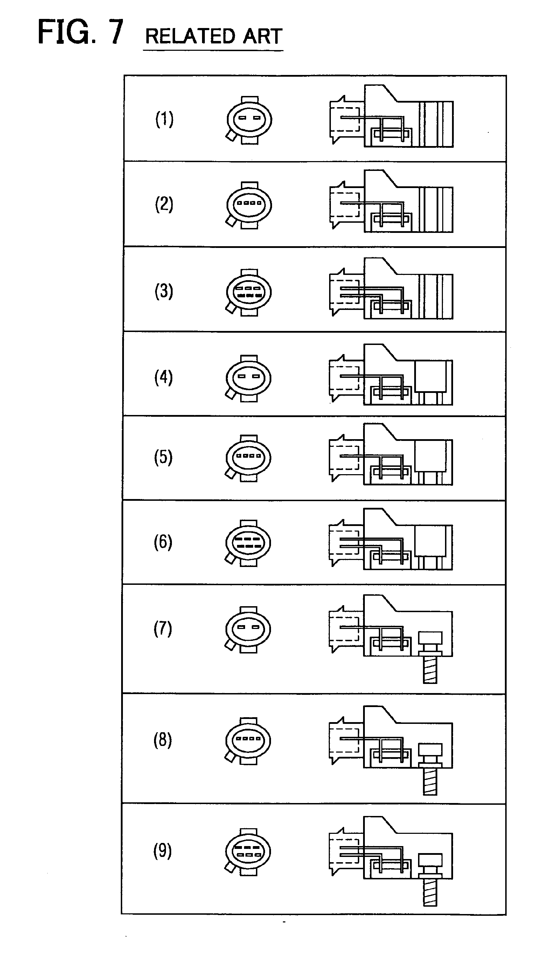

The connector shape and vehicle fixing shape of the electrical circuit device mounted in the vehicle are determined on the basis of the design demands of a vehicle maker. Therefore, the determination of a fixing place of the electrical circuit device, etc. changes, and thus resin cases having various shapes may be needed. When three kinds of connector shapes such as 2P connector, 4P connector and 6P connector are assumed and also three kinds of vehicle fixing shapes such as metal bush thick type, metal bush thin type and metal bolt type are assumed, nine types of case shapes are achieved by multiplying the number (three) of the types in the connector shape and the number (three) of the types in the vehicle fixing shape are needed. Here, Fig. 7 shows the nine types in the overall shape of the electrical circuit device. With respect to the vehicle fixing shapes, (1) to (3) represent metal bush thick types, (4) to (6) represent metal bush thin types, and (7) to (9) represent metal bolt types. With respect to the connector shapes, (1), (4), (7) represent 2P connectors, (2), (5), (8) represent 4P connectors and (3), (6), (9) represent 6P connectors. Nine kinds of molds for resin molding are needed to mold resin cases of these nine kinds of shapes. As described above, such a requirement to manufacture so many kinds of molding molds to adapt to the various shapes of the electrical circuit device significantly increases the manufacturing cost of the molding molds and is a problem. When a new shape of the electrical circuit device is created, a mold for molding must be manufactured every time the a new shape is added, making it difficult to take a quick countermeasure.

Therefore, what is needed is a resin housing structure of an electrical circuit device which can adapt to many kinds of shapes with a small number of molding molds.

### SUMMARY OF THE INVENTION

Respective means suitable to solve the above problem will be described by adding the action and effect thereof as occasion demands.

According to the present invention, a resin housing structure of electrical circuit device mounted in a vehicle is characterized in that a resin connector equipped with an electrical circuit having a sensor mounted thereon and a connector terminal for electrically connecting the electrical circuit to the external, and a resin case equipped with a fixing portion to be fixed to a vehicle are divisionally formed, and the resin connector and the resin case are joined to each other and unified into one body.

Accordingly, the resin connector formed by using a mold for molding the resin connector and the resin case formed by using a mold for molding the resin case are integrally joined to each other, whereby the number of types of molds can be more greatly reduced as compared with a conventional structure achieved by manufacturing a resin housing of overall electrical circuit device with a single molding mold. Accordingly, the cost required for the molding molds can be reduced. Furthermore, when an electrical circuit device having a new shape can be implemented by combining an existing resin connector shape and an existing resin case shape, it can be manufactured by using an existing mold for molding the resin connector and an existing mold for molding the resin case without newly forming a molding mold, so that the present invention can take a quick countermeasure to provide an increase of the types in the shape of the electrical circuit device.

It is preferable that the shape of the resin connector is selected from plural kinds of connector shapes and the shape of the fixing portion of the resin case is selected from plural kinds of fixing shapes. Therefore, the present invention can adapt to a electrical circuit device whose number of types in shape is equal to the product of the number of types in the connector shape and the number of types in the vehicle fixing shape.

Furthermore, the resin connector and the resin case are joined to each other by any one of adhesion based on adhesive, laser welding, vibration welding, ultrasonic welding, caulking, DSI formation. Accordingly, in accordance with a specification required to the electrical circuit device, the resin connector and the resin case can be surely integrally joined to each other according to any one joint method.

Furthermore, the sensor is preferably a G sensor for detecting acceleration. Accordingly, in collision detecting electrical circuit device having a G sensor mounted therein, many kinds of connector shapes and fixing shapes can be dealt with by a few types of molding molds.

According to the resin housing structure of the electrical circuit device of the present invention, the number of molds can be reduced to be less than that of the conventional structure that the resin housing of the overall electrical circuit device is manufactured by a single molding mold. Accordingly, the manufacturing cost of the molding molds can be reduced. Furthermore, when an electrical circuit device having a new shape can be implemented by combining an existing resin connector shape and an existing resin case shape, it can be manufactured by using an existing mold for molding the resin connector and an existing mold for molding the resin case without newly forming a molding mold. Therefore, the present invention can take a quick countermeasure to increase of the number of types concerning the shapes of electrical circuit device.

### BRIEF DESCRIPTION OF THE DRAWINGS

The above and other objects, features and advantages of the present invention will become more apparent from the following detailed description made with reference to the accompanying drawings. In the drawings:
Figs. 1A - 1 B are front view and side view diagrams showing the construction of a connector portion of electrical circuit device according to an embodiment of the present invention;
Fig. 2 is a side view showing the construction of a case portion of electrical circuit device;
Fig. 3 is a side view showing the construction of the electrical circuit device under completion when the connector portion and the case portion are joined and unified into one body;
Fig. 4 is a diagram showing connector shape types and vehicle fixing shape types;
Fig. 5 is a diagram showing that nine types of electrical circuit device are manufactured by using six types of resin molds;
Fig. 6 is a side view of a related art electrical circuit device; and
Fig. 7 is a diagram showing the nine types of exemplary shapes of the related art electrical circuit device.

### DETAILED DESCRIPTION OF THE PREFERRED EMBODIMENT

A preferred embodiment according to the present invention will be described hereunder with reference to the accompanying drawings.

The electrical circuit device 1 according to the embodiment of the present invention is a collision detecting sensor which is equipped to the front portion of a vehicle and transmits a G detection signal representing occurrence of collision or vibration to an air bag control device.

The electrical circuit device 1 is constructed by separately forming a connector portion 10 and a case portion 20 and then joining these portions into one body. The constructions of the connector portion 10 and the case portion 20 and the joining of these portions will be described more fully below.

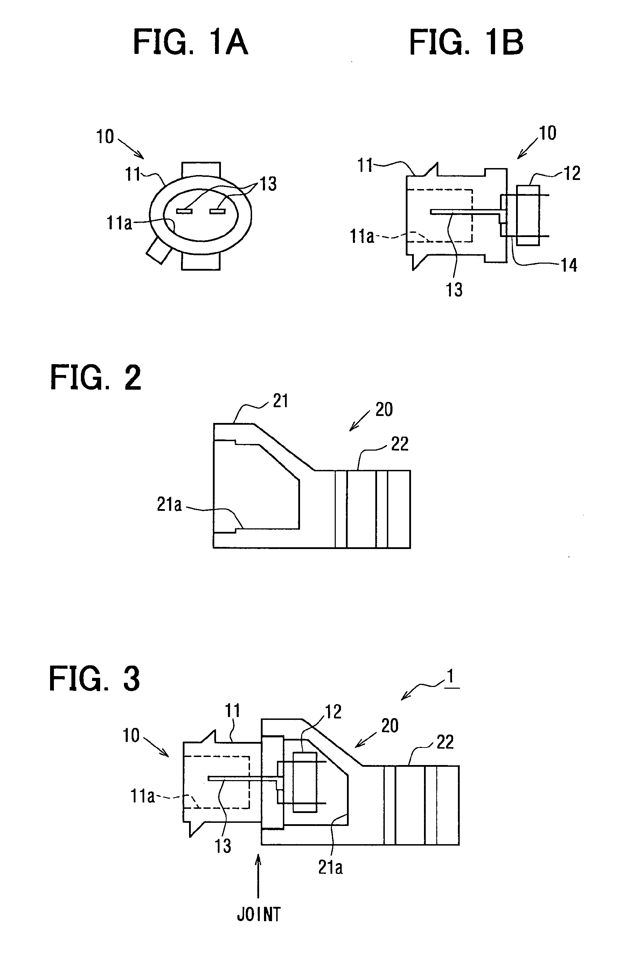

Referring to Figs. 1A - 1 B, the connector portion 10 mainly comprises a connector main body 11 formed of a resin material, a circuit portion 12 having a G sensor mounted thereon, and a connector terminal 13 connected to the circuit portion 12.

The connector main body 11 is a resin-molded part that may be formed from, for example, PBT (polybuthylene terephthalate) resin, nylon resin or the like. The connector main body 11 is equipped with a recess portion 11 a for receiving, for example, a plug of a signal transmitting code electrically connected to the air bag control device.

The circuit portion 12 comprises a P-plate (glass epoxy type board) on which an electrical circuit is mounted. The electrical circuit includes a G sensor and outputs collision or vibration detected by the G sensor as a G detection signal. The circuit portion 12 is supported by a wire 14 connected to a connector terminal 13 exposed from the end face of the connector main body 11 at the opposite side to the recess portion 11 a, and electrically connected to the wire 14. The circuit portion 12 may be designed in such a P-plate less type that the G sensor is directly mounted on the connector main body 11 without using any P-plate.

The connector terminal 13 is a pin-type metal part electrically connected to the circuit portion 12 and the wire 14. About half of the connector terminal 13 containing one end portion thereof is exposed to project into the inside of the recess portion 11 a of the connector main body 11, and about the remaining half containing the other end portion is integrally molded with the connector main body 11 to be embedded in the connector main body 11. When the plug of the signal transmitting code connected to the air bag control device described above is engagingly inserted in the recess portion 11 a, the plug and the exposed portion of the terminal connector 13 are brought into contact with each other, whereby the air bag control device and the circuit portion 12 are electrically connected to each other. In the figures, a 2P type terminal connector in which two end portions of a pin-type terminal connector 13 are exposed in the recess portion 11 a of the connector main body 11 is adopted. However, a 4P type terminal connector in which four end portions are exposed or a 6P type terminal connector in which six end portions are exposed may be adopted.

Referring to Fig. 2, the electrical circuit device further includes a case portion 20 mainly comprised of a case main body 21 formed of resin material and a fixing portion 22 to be fixed to the vehicle. The case main body is a resin-molded part, and formed of PBT (polybuthylene terephthalate) resin, nylon resin or the like as in the case of the connector main body 11. One end side of the case portion 20 is designed in a tapered shape having a large diameter, and equipped with a recess portion 21 a forming a tapered space for accommodating the circuit portion 12 described above when the connector portion 10 is joined. The other end side of the case portion 20 is equipped with a vehicle fixing portion 22 to be fixed to the vehicle. A metal bush is embedded in the vehicle fixing portion 22, and the vehicle fixing portion is fixed to the fixing position of the vehicle side through the metal bush by caulking.

Referring to Fig. 3, the connector portion 10 and the case portion 20 described above are unified into one body by joining the peripheral edge of the circuit portion 12 of the connector main body 11 and the inner peripheral surface of the recess portion 21 a of the case main body 21 under the state that the circuit portion 12 of the connector portion 10 is accommodated in the recess portion 21 a of the case portion 20. The joining method may be selected from various methods in accordance with the requirements defined by the specification of the electrical circuit device. For example, adhesion using adhesive agent, laser welding, vibration welding, ultrasonic welding, caulking, DSI (Die Slide Injection) molding, etc. may be adopted as the joining method.

Next, the effect achieved by using the resin housing structure of the electrical circuit device 1 described above will be described. Various connector shapes and vehicle fixing shapes of various kinds of electrical circuit devices mounted in vehicles are used from the viewpoint of design ideas of vehicle makers, fixing places of electrical circuit device, etc.

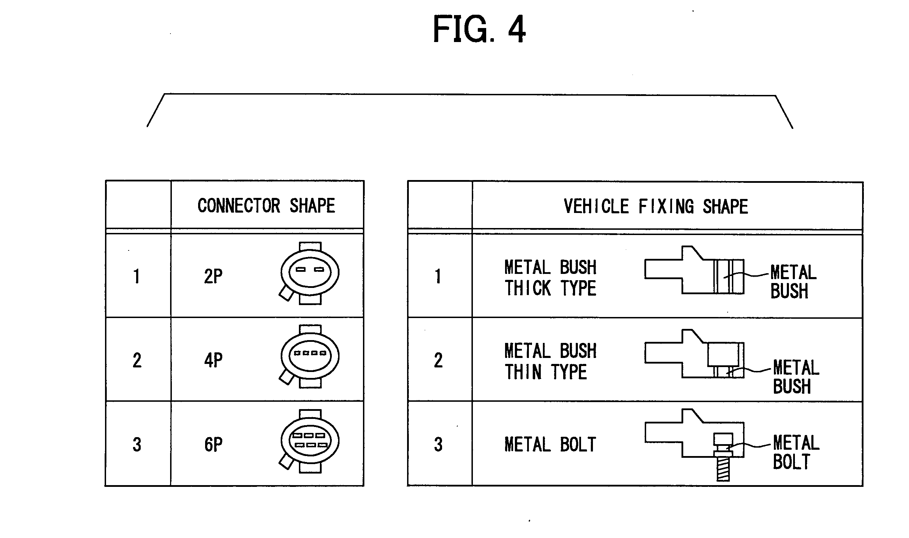

Here, it is assumed a case where three kinds of shapes containing a 4P connector (number 2) and a 6P connector (number 3) in addition to the 2P connector (number 1) used in the above embodiment must be considered as the connector shapes as shown in Fig. 4. Furthermore, it is also assumed a case where three kinds of shapes containing a metal bush thin type having a thin metal bush embedded therein (number 2) and a metal bolt type having a metal bolt embedded therein (number 3) in addition to a metal bush thick type (number 1) having a thick metal bush embedded therein which is used in the above embodiment must be considered as the vehicle fixing shapes as shown in Fig. 4. In this case, there exist nine kinds of the shapes of the overall electrical circuit device achieved by multiplying the number (three) of the types in the connector shape by the number (three) of the types in the vehicle fixing shape. In the resin housing structure of the conventional electrical equipment, the connector portion and the case portion are integrally resin-molded with each other, and thus in order to manufacture nine types in the shape of the electrical circuit device, it is required to prepare nine types of resin molding molds.

According to the resin housing structure of the electrical circuit device, the present invention can adapt to the nine types in shape of electrical circuit device by using three types of molds for molding the connector portion 10 and three types of molds for molding the case portions 20, totally six types of resin molding molds. Fig. 5 is a diagram showing that nine variations of electric circuit equipment can be covered by using six molds. The left side of Fig. 5 shows three types in the connector shape of the connector portion, the center side of Fig. 5 shows three types in vehicle fixing shape of the case portion, and the right side of Fig. 5 shows the overall shape of nine types of electrical circuit device. The vehicle fixing shapes in respective electrical circuit device are the metal bush thick type in (1) to (3), the metal bush thin type in (4) to (6) and the metal bolt type in (7) to (9). The connector shapes are the 2P connector in (1), (4), (7), the 4P connector in (2), (5), (8) and the 6P connector in (3), (6), (9). Here, the electrical circuit device having the shape (1) is manufactured by joining and unifying the connector portion molded with a mold for the 2P connector and a case portion molded with a mold for the metal bush thick type. Furthermore, the electrical circuit device having the shape (9) is manufactured by joining and unifying the connector portion molded with a mold for the 6P connector and the case portion molded with a mold for the metal bolt type.

As is apparent from the foregoing description, according to this embodiment, the connector portion 10 manufactured by using the mold for molding the connector portion 10 and the case portion manufactured by using the mold for molding the case portion 20 are joined and unified into one body, whereby the number of molds can be reduced more greatly as compared with the conventional structure that the resin housing of the overall electrical circuit device is manufactured by one mold. Accordingly, the cost required to manufacture the molds can be reduced. Furthermore, when an electrical circuit device having a new shape can be implemented by combining the shape of an existing connector portion 10 and the shape of an existing case portion 20, the electrical circuit device concerned can be manufactured by using both the existing molds for the connector portion 10 and the case portion 20 without manufacturing any new mold, so that the increase of the types in shape of electrical circuit device can be quickly supported.

Furthermore, it is preferable that the connector portion 10 is selected from plural types of connector shapes, and also the fixing portion of the case 20 is selected from plural types of fixing shapes. Accordingly, an electrical circuit device whose number of types is equal to the product of the number of types in connector shape and the number of types in fixing shape can be supported.

The electrical circuit device 1 is collision detecting electric circuit equipment in which a G sensor for detecting acceleration is mounted, and thus collision detecting electrical circuit device in which many types of connector shapes and fixing shapes exist can be supported by a small number of types in shape of molds.

The present invention is not limited to the above embodiments, and various kinds of modifications may be made without departing from the subject matter.

For example, the connector shapes and vehicle fixing shapes of the electrical circuit device in the above embodiments are merely examples, and thus it should be understood that the present invention is not limited to these examples.

The resin housing structure of the electrical circuit device of the present invention is applicable to electrical circuit device having various kinds of mechanic or electric sensors for which plural kinds of connector shapes and vehicle fixing shapes exist.

## Claims

1. A resin housing structure for an electrical circuit device (1) to be mounted in a vehicle, comprising:
a resin connector (10) equipped with an electrical circuit (12) having a sensor mounted thereon and a connector terminal (13) for externally electrically connecting the electrical circuit (12); and
a resin case (20) equipped with a fixing portion (22) to be fixed to the vehicle, wherein the resin connector (10) and the resin case (20) are separately formed, wherein the resin connector (10) and the resin case (20) are joined to each other and unified into one body.

2. The resin housing structure according to claim 1, wherein the shape of the resin connector (10) is selected from predetermined kinds of connector shapes, and the shape of the fixing portion (22) of the resin case (20) is selected from predetermined kinds of fixing shapes.

3. The resin housing structure according to claims 1 or 2, wherein the resin connector (10) and the resin case (20) are joined to each other by any one of adhesion based on adhesive, laser welding, vibration welding, ultrasonic welding, caulking, DSI formation.

4. The resin housing structure of the electrical circuit device (1) according to any one of claims 1 to 3, wherein the sensor is a G sensor for detecting acceleration.

5. A method for assembling a resin housing structure for an electrical circuit device (1) to be mounted in a vehicle, the method comprising:
forming a resin connector (10) equipped with an electrical circuit (12) having a sensor mounted thereon and a connector terminal (13) for externally electrically connecting the electrical circuit (12);
forming a resin case (20) equipped with a fixing portion (22) to be fixed to the vehicle, wherein the resin connector (10) and the resin case (20) are separately formed; and
joining the resin connector (10) and the resin case (20) together into one body.

6. The method of claim 5, wherein the resin connector (10) and the resin case (20) are joined to each other by any one of adhesion based on adhesive, laser welding, vibration welding, ultrasonic welding, caulking, DSI formation.

7. The method of claim 5, wherein the forming of the resin case (20) and the resin connector (10) further comprises selecting a shape of the resin connector (10) from predetermined kinds of connector shapes and selecting a shape of the fixing portion (22) of the resin case (20) from predetermined kinds of fixing shapes.
